# EUROPÄISCHE PATENTSCHRIFT

(11) **EP 2 581 249 B1**
(45) Veröffentlichungstag und Bekanntmachung des Hinweises auf die Patenterteilung: **15.02.2017**
(21) Anmeldenummer: 12187978.7
(22) Anmeldetag: 10.10.2012
(51) Int. Cl.: B60K 1/04, B60K 3/02, B60K 3/04, B60S 5/06, B60K 6/00, B60T 1/10, B60K 15/03, B60K 15/07, B60K 11/02, B60K 11/04, B60K 1/00, B60K 7/00, B60K 6/32, B60K 6/46, B64F 1/22, B64F 1/32

(54) **SCHLEPPER MIT UNTERSCHIEDLICHER ENERGIEQUELLE**
TRACTOR WITH DIFFERENT ENERGY SOURCES
TRACTEUR AVEC SOURCES D'ÉNERGIE DIFFÉRENTES

(30) Priorität: 10.10.2011 DE 102011115570
(43) Veröffentlichungstag der Anmeldung: 17.04.2013
(73) Patentinhaber: MULAG Fahrzeugwerk, 77728 Oppenau (DE)
(72) Erfinder: Verbücheln, Karl-Josef, 77871 Renchen-Ulm (DE); Franz, Harald, 77749 Hohberg (DE); Heuberger, Peter, 77704 Oberkirch (DE)
(74) Vertreter: Weickmann & Weickmann PartmbB

(56) Entgegenhaltungen:
- EP-A2- 1 398 201
- EP-A2- 1 481 838
- EP-A2- 1 495 906
- DE-A1- 10 321 773
- DE-A1- 19 641 254
- DE-A1-102005 042 937
- DE-A1-102007 037 693
- US-A1- 2009 155 668

## Beschreibung

### I. Anwendungsgebiet

Die Erfindung betrifft einen Schlepper, insbesondere einen Vorfeld-Schlepper, mit dem auf dem Flughafen-Vorfeld Gepäckwägen und ähnliches gezogen werden.

### II. Technischer Hintergrund

Derartige Vorfeld-Schlepper fahren sowohl im Freien, auf dem Flughafen-Vorfeld, als auch in geschlossenen Räumen, nämlich Hangars oder Hallen, in denen z. B. Gepäck verladen wird.

In dem meisten Fällen werden derartige Schlepper mit Verbrennungsmotoren, also Dieselmotoren oder Erdgasmotoren, betrieben, und die entsprechenden Abgase sammeln sich in den geschlossenen Räumen an. Zusätzlich kommt der generelle Aspekt der CO₂-Erzeugung hinzu.

Darüber hinaus gibt es auch elektrisch betriebene Schlepper, deren Elektromotor die Energie aus einer Batterie bezieht. Das bei Batterien üblicherweise bestehende Gewichtsproblem ist hier nachrangig, da derartige Schlepper ohnehin ein hohes Eigengewicht benötigen, um ihre Antriebsleistung auf den Boden übertragen zu können.

Problematisch ist jedoch die Reichweite, also Betriebsdauer, die mit einer solchen Batterieladung erzielbar ist, die ja durch das Volumen der Batterie, die in dem Schlepper untergebracht werden kann, weitaus mehr beschränkt ist als durch das zulässige Gewicht.

Da derartige Schlepper mit einer Batterieladung in der Regel nur eine Schicht von etwa 8 Stunden fahren können, die Schlepper aber häufig im Mehrschichtbetrieb, teilweise sogar im 24-Stunden-Betrieb eingesetzt werden sollen, ist es sehr nachteilig, dass zum Nachladen der Batterie der Schlepper über mehrere Stunden an die Ladestation muss und ungenutzt stehen bleibt. Die Alternative ist ein wechselbarer Batteriesatz, der jedoch erhebliche Kosten verursacht und auch einen nicht unerheblichen Aufwand zum Wechseln der Batterie.

Die gattungsbildende EP 1 495 906 A2 beschreibt einen Industrieschlepper, der mittels eines Elektromotors angetrieben wird, welcher seine Energie wahlweise aus einer Brennstoffzellen-Einheit oder einem Batteriepack erhält, die beide in den dafür vorgesehenen Raum des Fahrgestells des Schleppers passen.

Durch die DE 103 21 773 A1 wird der Baukasten-Gedanke am Beispiel eines Gabelstaplers weiterentwickelt, indem dort als Energiequelle wahlweise ein Batteriepack, ein Verbrennungsmotor, eine Hybrideinheit oder eine Brennstoffzelleneinheit vorgeschlagen werden.

Aus der DE 10 2007 037 693 A1 ist es bekannt, die beim Bremsen anfallende Energie mittels Rekuperation in elektrische Energie umzuwandeln und zu speichern, wobei dies am Beispiel eines Flurförderzeuges beschrieben wird, für das jedoch kein Baukastenprinzip hinsichtlich der Energiequelle vorgesehen ist.

### III. Darstellung der Erfindung

### a) Technische Aufgabe

Es ist daher die Aufgabe gemäß der Erfindung, einen Schlepper mit einem elektrischen Antrieb zur Verfügung zu stellen, dessen Energieversorgung einfach, kostengünstig und ohne lange Ladezeiten realisierbar ist, sowie insbesondere einen Baukasten zum Erstellen mit unterschiedlichen Energiequellen.

### b) Lösung der Aufgabe

Diese Aufgabe wird durch die Merkmale der Ansprüche 1 und 4 gelöst. Vorteilhafte Ausführungsformen ergeben sich aus den Unteransprüchen.

Die Erfindung umfasst zum einen einen Baukasten, um Vorfeld-Schlepper mit unterschiedlichen Energiequellen zur Versorgung des Elektromotors für den Antrieb zur Verfügung zu stellen.

Dementsprechend umfasst der Schlepper des Baukastens alles bis auf die Energieversorgungseinheit, also den Schlepper einschließlich des Elektromotors, wobei in dem Schlepper ein so genanntes Energie-Fach zur Verfügung steht zum Einsetzen und Anschließen der gewünschten Energieversorgungs-Einheit.

Ferner umfasst der Bausatz mindestens zwei verschiedene EnergieVersorgungseinheiten, nämlich einerseits einen Batteriepack in einer Größe, der in dem Energiefach aufnehmbar ist, und ebenso eine Brennstoff-Zelle, die in der Größe genau in das Energiefach passt.

Bei dem Batteriepack handelt es sich vorzugsweise um Bleibatterien, z. B. mit 600 Ah bei 8 N.

Bei der Brennstoffzelle handelt es sich um eine mittels Wasserstoff betriebene Brennstoffzelle, vorzugsweise eine Niedertemperatur-Brennstoffzelle.

Das Energiefach im Schlepper weist dabei Kopplungsstellen
- für die Fahrzeugheizung
- für die Anzeigeeinheit der Energieversorgung,
- wenigstens eine Zugangsöffnung zum Betanken der Brennstoffzelle und/oder
- wenigstens eine Zugangsöffnung zum Anschließen des Batteriepacks zwecks Nachladen des Batteriepacks.
auf.

Mittels dieses Baukastens lässt sich also somit unter anderem ein Vorfeld-Schlepper auf einfache Art und Weise herstellen, bei dem die Antriebsräder von wenigstens einem Elektromotor angetrieben werden und bei dem eine in dem Energiefach untergebrachte Brennstoffzelle den wenigstens einen Elektromotor mit elektrischer Energie versorgt.

Ein weiterer Zweck der Pufferbatterie kann darin bestehen, beim Abbremsen des Schleppers mittels des wenigstens einen Elektromotors des Schlepperantriebs erzeugten elektrischen Strom zwischenzuspeichern. Zu diesem Zweck verfügt der Schlepper über eine entsprechende Steuerungselektronik, die unter anderem auch diesen Rekuperationsbetrieb sowie alle elektrischen Vorgänge innerhalb des Schleppers steuert.

Auch der hierfür verwendete Elektromotor muss für diesen Rekuperationsbetrieb geeignet ausgebildet werden.

Mit der wichtigste Zweck der Pufferbatterie besteht jedoch darin, bei benötigter Höchstleistung an den Antriebsrädern den wenigstens einen Elektromotor nicht nur mit elektrischem Strom aus der Brennstoffzelle zu versorgen, sondern zusätzlich über eine begrenzte Zeit auch parallel dazu mit Strom aus der Pufferbatterie, der somit dazu dient, die vom Schlepper aufbringbare Höchstleistung über die maximale Leistung der Brennstoffzelle hinaus zu erhöhen. Zu diesem Zweck ist die Pufferbatterie deutlich größer ausgelegt als es rein für das Inbetriebsetzen und ggf. Beheizen der Brennstoffzelle notwendig ist. So kann die Pufferbatterie beispielsweise aus einer 80 V-Batterien mit jeweils 120 Ah bestehen.

Um ein Vereisen der Wasserstoff-Einspritzdüsen der Brennstoffzelle bei Temperaturen um oder unterhalb des Gefrierpunktes zu vermeiden, sind zumindest die Einspritzdüsen, vorzugsweise auch die Umgebung der Einspritzdüsen, mittels einer elektrisch betriebenen Heizung beheizbar, die insbesondere aus von elektrischem Strom durchströmten Heizwicklungen besteht. Diese werden bei Ingangsetzen der Brennstoffzelle von der Pufferbatterie mit Strom versorgt.

Normalerweise jedoch ist eher die Überhitzung als die Unterkühlung der Brennstoffzelle problematisch, da diese im Betrieb große Mengen an Abwärme freisetzt und deshalb mit einem flüssigkeitsdurchströmten Kühlsystem gekühlt wird. Dieses gibt über einen Rückkühler, der von Umgebungsluft durchströmt wird, die Überschusswärme an die Umgebung ab. Weiterhin jedoch weist der Flüssigkeits-Kühlkreislauf eine steuerbare Abzweigung zu einem weiteren Wärmetauscher in der Fahrerkabine auf, mittels dessen im Winter die Fahrerkabine beheizt wird.

Zur Kühlung des Rückkühlers mittels Umgebungsluft wird das Energiefach von Umgebungsluft durchströmt, insbesondere von der einen zur anderen Seite des Schleppers, und der Schlepper weist hierzu auf beiden Seiten großräumige Lüftungsschlitze auf, hinter denen sich auf einer Seite der Wärmetauscher befindet.

Vorzugsweise sind alle zum Betrieb der Brennstoffzelle notwendigen Aggregate, insbesondere die Brennstoffzelle, der Wasserstofftank, die Pufferbatterie bzw. Starter-Batterie, der erste Wärmetauscher für den Flüssigkeits-Kühlkreislauf der Brennstoffzelle, der Luftfilter zum Ansaugen der Umgebungsluft für die Verbrennung in der Brennstoffzelle, die elektronische Steuerung in einem gemeinsamen Gehäuse untergebracht, die damit sehr leicht in das Energiefach eingesetzt und aus diesem wieder entnommen werden kann, wobei natürlich auch eine Befestigung im Energiefach erfolgt.

Die Anschlüsse im Energiefach für die genannten Aggregate des Schleppers sind dabei so angeordnet, dass sie bei in dem Energiefach eingesetzter Brennstoffzellen-Einheit noch angeschlossen werden können.

Vorzugsweise besitzt das Gehäuse der Brennstoffzellen-Einheit eine Größe, die in eine DIN-Batterie-Box passt, und das Energiefach hat die Größe einer DIN-Batterie-Box.

In einer ersten Ausführungsform ist der Wasserstofftank in dem Schlepper, vorzugsweise im Gehäuse der Brennstoffzellen-Einheit, fest montiert und besitzt einen Tankanschluss zum Auftanken.

In einer zweiten Ausführungsform ist der Wasserstofftank als Austauschtank konzipiert, also schnell und leicht lösbar und entnehmbar, so dass er nach dem Entleeren durch einen gefüllten neuen Wasserstofftank ersetzt werden kann.

Der Wasserstofftank besitzt ein Aufnahmevermögen von 1,5 bis 2 kg Wasserstoff. Der Wasserstoff wird im Tank der Brennstoffzelle bei einem Druck zwischen 300 und 400 bar, vorzugsweise zwischen 340 und 360 bar, gespeichert.

Die von der Brennstoffzelle abgegebene Spannung liegt zwischen 63 und 101 Volt bei einer Nominalspannung von 84 Volt.

Der Baukasten kann jedoch auch noch weitere Energieversorgungseinheiten aufweisen, die den nötigen Strom für den Elektromotor des Antriebs zur Verfügung stellen:
So kann in das Energiefach beispielsweise eine Hybrideinheit eingesetzt werden, die aus einem gegenüber dem reinen Batteriebetrieb kleineren Batteriepack besteht, der beispielsweise 240 Ah bei 80 V speichert, aber zusätzlich einen Verbrennungsmotor als Range-Extender umfasst. Bei dem Verbrennungsmotor kann es sich um einen Hubkolben-Motor, beispielsweise für die Verbrennung von Diesel, ebenso handeln wie um einen Gasmotor, letzterer dann vorzugsweise in der Bauform als Turbine, die ebenfalls einen Generator antreibt.

Der Range-Extender liefert seinen elektrischen Strom primär an den Elektromotor, und lediglich dort nicht benötigter elektrischer Strom wird in den Batteriepack eingespeist, und nur wenn der Batteriepack fast leer ist, wird primär der Batteriepack geladen.

Von der Anordnung her befindet sich dann der Batteriepack im unteren Bereich des Energiefaches, während darüber der Range-Extender angeordnet ist, weshalb der das Energiefach nach oben abschließende Deckel unter Umständen haubenförmig ausgebildet sein kann, um ausreichend Raum für den Range-Extender zur Verfügung zu stellen.

Eine weitere Alternative ist eine Energieversorgungseinheit, die ausschließlich aus einem Verbrennungsmotor, insbesondere als Gasturbine, besteht, der jedoch wiederum wie beim Hybridantrieb keine mechanische Verbindung mit der Antriebsachse hat, sondern über einen Generator Strom erzeugt, der unmittelbar dem Elektromotor als Antriebsenergie zur Verfügung gestellt wird, der - außer einer Pufferbatterie - keinen Batteriepack umfasst.

Auch dieser Gasantrieb ist als vollständig funktionsfähige Einheit in einem Gehäuse untergebracht und in das Energiefach einsetzbar, ebenso wie die Hybrideinheit.

### c) Ausführungsbeispiele

Ausführungsformen gemäß der Erfindung sind im Folgenden beispielhaft näher beschrieben. Es zeigen:

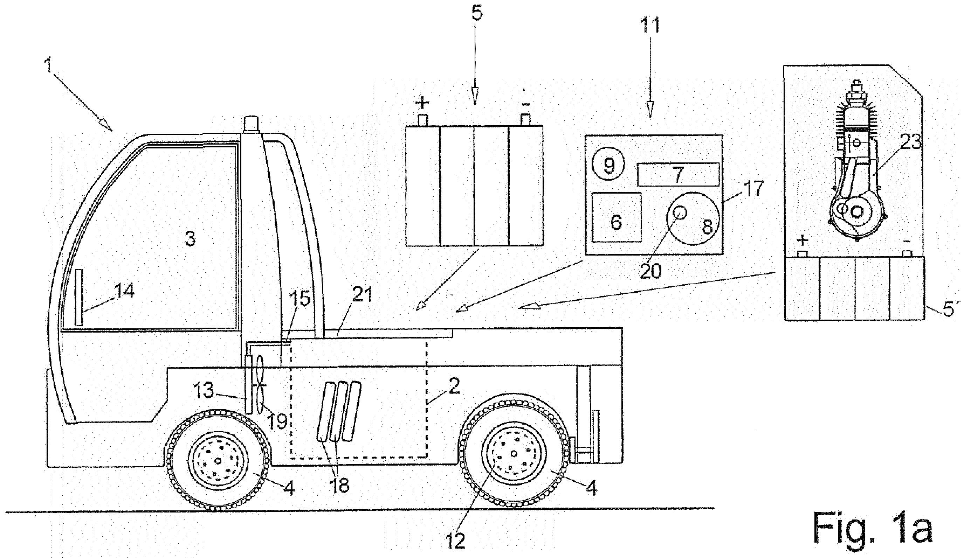

- Fig. 1a:: eine Seitenansicht des erfindungsgemäßen Schleppers, und

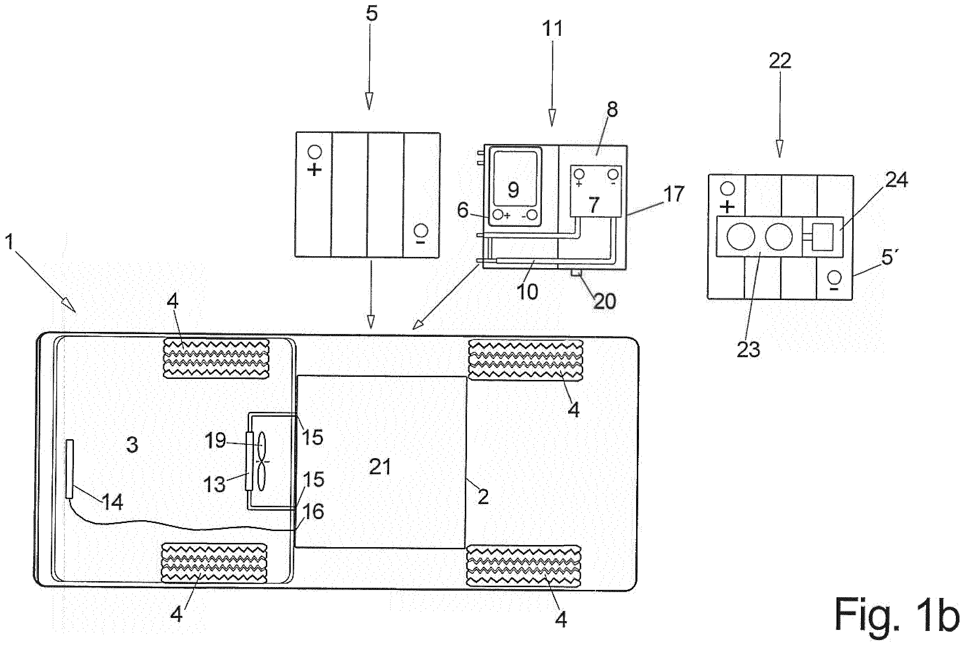

- Fig. 1b:: eine Aufsicht auf den Schlepper der Figur 1a.

Der erfindungsgemäße Schlepper hat in diesem Fall die prinzipielle Bauform eines sogenannten Frontlenkers, bei dem die Fahrerkabine 3 auf dem Frontteil des Chassis sitzt und insbesondere keine nach vorne überstehende Schnauze des Schleppers vorhanden ist.

Zumindest die vorderen Räder 4 sind lenkbar, während die hinteren Räder 4 von einem oder jeweils einem Elektromotor 12, vorzugsweise in Form eines Radnabenmotors, angetrieben sind.

Die Vorderachse befindet sich dabei etwa unter dem hinteren Teil der Fahrerkabine.

Der Laderaum hinter der Fahrerkabine erstreckt sich bis auf eine Höhe etwa auf der Unterkante der Seitenfenster der Fahrerkabine, wobei vor allem der Raum zwischen den Achsen als Laderaum zur Verfügung steht, aber auch der verbleibende Abstand oberhalb der Hinterachse.

Trotz geringer Außenabmessungen besitzen derartige Vorfeldschlepper ein hohes Gewicht von ca. 4 Tonnen, um die vorhandene Antriebsleistung schlupffrei auf den Boden übertragen zu können. Zu diesem Zweck besteht das tragende Fahrgestell teilweise aus massiven Stahlplatten.

Der wenigstens eine Elektromotor 12 zum Antreiben des Schleppers 1 erhält seine elektrische Energie von einer Energie-Versorgungseinheit, die in einem dafür im Laderaum des Schleppers 1 hinter der Fahrerkabine 3 untergebrachten Energiefach 2 angeordnet werden kann. Das Energiefach 2 ist zu diesem Zweck nach oben offen und kann mittels eines Deckels 21, der auch als aufklappbare Klappe ausgebildet sein kann, verschlossen werden nach Einsetzen der Energieversorgungseinheit.

Als Energieversorgungseinheit stehen mindestens zwei Alternativen zur Verfügung, die zusammen mit dem Schlepper 1 ohne die Energieversorgungseinheit einen Bausatz bilden:
- Einerseits kann ein Batteriepack 5 als Energieversorgungseinheit in das Energiefach 2 gesetzt werden, welches den Elektromotor 12 mit elektrischem Storm versorgt, bis die Ladung des Batteriepacks 5 erschöpft ist.

Dann allerdings muss über eine längere Zeit dieser Batteriepack 5 entweder nachgeladen werden oder gegen ein geladenes neues Batteriepack 5 austauscht werden.
- Alternativ kann das Energiefach 2 eine Brennstoffzelleneinheit 11 eingesetzt werden, die eine Brennstoffzelle 7 mit allen zu deren Betrieb notwendigen Nebenaggregaten einschließlich eines Brennstofftanks umfasst, die gemeinsam in einem Gehäuse 17 montiert sind, so dass die gesamte Brennstoffzelleneinheit 11 sehr leicht in das Energiefach 2 gestellt, fixiert und in Betrieb genommen werden kann durch Verbinden vor allem der elektrischen Anschlüsse der Brennstoffzelle 7 mit dem Controller des Elektromotors 12.

Die Brennstoffzelleneinheit 11 umfasst dabei außer der Brennstoffzelle 7 selbst einen Wasserstofftank 8, der im Gehäuse 17 fest montiert ist und einen Tankanschluss 20 besitzt, über den - durch eine entsprechende öffenbare Klappe in der Seitenwand des Energiefaches 2 - der Wasserstofftank 8 befüllt werden kann, was innerhalb weniger Minuten möglich ist.

Ferner umfasst die Brennstoffzelleneinheit 11 eine elektrische Steuereinheit zum Betrieb der Brennstoffzelle, einen Luftfilter 9, über den die für die Verbrennung benötigte und angesaugte Umgebungsluft gereinigt wird sowie eine Pufferbatterie 6, deren Energie vor allem benötigt wird, um die Brennstoffzelle 7 in Betrieb zu setzen, was bei niedrigen Temperaturen auch eine elektrische Beheizung der Brennstoffzelle 7, insbesondere deren Wasserstoffeinspritzdüsen, mittels elektrischem Stroms aus der Pufferbatterie 6 umfasst.

In diesem Fall ist die Pufferbatterie 6 jedoch größer ausgelegt als zu dem bisher beschrieben Zweck benötigt, da sie gleichzeitig als Zwischenspeicher für rekuperierte Energie dient, also der Energie, die der Elektromotor 12 im Schiebe- oder Bremsbetrieb als Generator erzeugt.

Die Pufferbatterie hat deshalb vorzugsweise einen Energiegehalt von mindestens 80, besser 120 Ah.

Um den Betriebszustand der Brennstoffzelle 7 jederzeit im Auge zu haben, ist in der Fahrerkabine 3 des Schleppers 1 eine Anzeigeeinheit 14 montiert, die mit der vorzugsweise in der Brennstoffzelleneinheit 11 untergebrachten elektrischen oder elektronischen Steuerung für die Brennstoffzelle 7 verbunden ist.

Die Brennstoffzelleneinheit 11 umfasst auch einen flüssigkeitsbetriebenen Kühlkreislauf, um die im Betrieb der Brennstoffzelle 7 an dieser normalerweise entstehende Abwärme abzuführen.

Dies geschieht über einen in dem Kühlkreislauf integrierten Rückkühler 10, der auf einer Seite der Brennstoffzelleneinheit 11, im eingebauten Zustand in das Energiefach 2 unmittelbar hinter den entsprechenden Lüftungsschlitzen 18 in der Seitenwand des Energiefaches 2, angeordnet ist, wobei sich diese Lüftungsschlitze 18 vorzugsweise auf beiden Seiten in den Seitenwänden des Energiefaches 2 befinden, so dass das Energiefach 2 beidseitig belüftet und auch quer durchströmt werden kann.

Ferner benötigt die Fahrerkabine 3 bei niedrigen Außentemperaturen eine Beheizung:
Zu diesem Zweck ist in der Fahrerkabine ein Wärmetauscher 13 angeordnet, der mit dem Flüssigkeits-Kühlkreislauf der Brennstoffzelleneinheit 11 verbindbar ist über Kühlkreislaufanschlüsse 15, die jedoch nur geöffnet werden, wenn eine Beheizung der Fahrerkabine 3 benötigt wird.

In diesem Fall wird dann auch ein Ventilator 19 in Gang gesetzt, der den Wärmetauscher 13 mit Luft durchströmt und die Heizleistung erhöht.

Eine weitere Alternative für eine Energieversorgungseinheit ist die dargestellte Hybrideinheit 22:
Diese besteht aus einem Batteriepack 5' mit deutlich geringerer Kapazität als der Batteriepack 5, beispielsweise nur mit 400 Ah bei 80 V, sowie einem Verbrennungsmotor 23 als Range-Extender, der keine mechanische Verbindung zur Hinterachse besitzt, sondern lediglich über einen Generator 24 Strom produziert.

Mit diesem Strom kann der Range-Extender den Batteriepack 5' nachladen oder den Elektromotor 12 direkt mit Strom versorgen.

In der Regel wird der Range-Extender dann in Betrieb gesetzt, wenn entweder der Batteriepack 5' fast leer ist und nachgeladen werden muss, oder wenn die Steuerung für den Elektromotor 12 eine Höchstleistung anfordert, die höher ist als die maximale Leistung, die vom Batteriepack 5' entnommen werden kann. Dann wird der Strom aus dem Generator 24 direkt zusätzlich dem Elektromotor zugeführt und nur der Überschuss in den Batteriepack 5' eingespeist.

### BEZUGSZEICHENLISTE

- 1: Schlepper
- 2: Energie-Fach
- 3: Fahrerkabine
- 4: Rad
- 5, 5': Batteriepack
- 6: Pufferbatterie
- 7: Brennstoffzelle
- 8: Wasserstofftank
- 9: Luftfilter
- 10: Rückkühler
- 11: Brennstoffzelleneinheit
- 12: Elektromotor
- 13: Wärmetauscher
- 14: Anzeigeeinheit
- 15: Kühlkreislaufanschlüsse
- 16: elektrische Anschlüsse
- 17: Gehäuse
- 18: Lüftungsschlitze
- 19: Ventilator
- 20: Tankanschluss
- 21: Deckel
- 22: Hybrideinheit
- 23: Verbrennungsmotor
- 24: Generator

## Patentansprüche

1. Baukasten zum Herstellen eines Vorfeld-Schleppers (1) mit unterschiedlicher Energiequelle, umfassend
a) einen Schlepper (1) mit wenigstens einem Elektromotor (12) zum Antreiben der angetriebenen Räder (4),
b) wobei der Schlepper (1) ein Energie-Fach (2) aufweist, und
c) einen Batteriepack (5) in der Größe des Energie-Faches (2) und
d) ein Brennstoffzelleneinheit (11) mit Brennstoffzelle (7), Wasserstofftank (8), Rückkühler (10), Luftfilter (9), elektronischer Kontrolleinheit in einem gemeinsamen Gehäuse (17) als montierbare und demontierbare Brennstoffzelleneinheit (11) in der Größe des Energie-Faches (2), und
e) Kopplungsstellen (15, 16) im Energie-Fach (2) für die Fahrzeugheizung und die Anzeigeeinheit (14) für die Energieversorgung in der Fahrerkabine (3)
**dadurch gekennzeichnet, dass**
f) die Brennstoffzelleneinheit (11) eine Puffer-Batterie (6) umfasst,
g) Zugangsöffnungen zum Betanken der Brennstoffzelle (7) und Zugangsöffnungen zum Nachladen eines Batteriepacks (5) in den Wänden des Energie-Fachs (2) vorhanden sind,
h) der wenigstens eine Elektromotor (12) geeignet ist, bei einem Bremsen des Schleppers (1) im Generatorbetrieb elektrische Energie zu erzeugen und diese in der Puffer-Batterie (6) gespeichert wird.

2. Baukasten nach Anspruch 1,
**dadurch gekennzeichnet, dass**
der Baukasten eine Hybrideinheit (22) umfasst mit einem Batteriepack (5') und einem Verbrennungsmotor (23), insbesondere einem Dieselmotor, als Range-Extender, der über einen Generator (24) elektrische Energie erzeugt und diese an den Elektromotor (12) und den Überschuss an den Batteriepack (5') liefert.

3. Baukasten nach einem der vorhergehenden Ansprüche,
**dadurch gekennzeichnet, dass**
der Baukasten einen Gasantrieb in Form eines Kolbenmotors oder einer Gasturbine umfasst, die über einen Generator elektrische Energie erzeugt und als einzige Energieversorgung den Elektromotor (12) antreibt oder als Range-Extender in einer Hybrideinheit (22) zusammen mit einem Batteriepack (5') betrieben wird.

4. Vorfeld-Schlepper (1) mit
a) wenigstens einer angetriebenen Achse, die von wenigstens einem Elektromotor (12) angetrieben wird ,
b) wobei der Vorfeld-Schlepper (1) ein Energie-Fach (2) aufweist,
d) wobei in dem Energie-Fach (2) eine Brennstoffzelleneinheit (11) mit Brennstoffzelle (7), Wasserstofftank (8), Rückkühler (10), Luftfilter (9), elektronischer Kontrolleinheit in einem gemeinsamen Gehäuse (17) als montierbare und demontierbare Brennstoffzelleneinheit (11) in der Größe des Energie-Faches (2) angeordnet ist, die mit dem wenigstens einen Elektromotor (12) elektrisch verbunden ist, und
e) das Energie-Fach (2) Kopplungsstellen (15, 16) für die Fahrzeugheizung und die Anzeigeeinheit (14) für die Energieversorgung in der Fahrerkabine (3) aufweist,
**dadurch gekennzeichnet, dass**
f) die Brennstoffzelleneinheit (11) eine Puffer-Batterie (6) umfasst,
g) Zugangsöffnungen zum Betanken der Brennstoffzelle (7) und Zugangsöffnungen zum Nachladen eines Batteriepacks (5) in den Wänden des Energie-Fachs (2) vorhanden sind,
h) der wenigstens eine Elektromotor (12) geeignet ist, bei einem Bremsen des Schleppers (1) im Generatorbetrieb elektrische Energie zu erzeugen und diese in der Starter-Batterie (6) gespeichert wird.

5. Vorfeld-Schlepper nach Anspruch 4,
**dadurch gekennzeichnet, dass**
die Brennstoffzelle (7), insbesondere deren Wasserstoff-Einspritzdüsen, beheizt sind, insbesondere mittels elektrisch betriebener Heizwicklungen um die Einspritzdüsen, die insbesondere von der Puffer-Batterie (6) mit Strom versorgt werden.

6. Vorfeld-Schlepper nach Anspruch 4 oder 5,
**dadurch gekennzeichnet, dass**
die Brennstoffzelle (7) mittels eines Flüssigkeitskühlkreislaufs flüssigkeitsgekühlt ist und einen Rückkühler (10) umfasst, der mittels Umgebungsluft rückgekühlt wird.

7. Vorfeld-Schlepper nach Anspruch 6,
**dadurch gekennzeichnet, dass**
der Flüssigkeits-Kühlkreislauf eine steuerbare Abzweigung zu einem Wärmetauscher (15) in der Fahrerkabine (3) umfasst.

8. Vorfeld-Schlepper nach Ansprüchen 4 bis 7,
**dadurch gekennzeichnet, dass**
das Energie-Fach (2) von der linken zur rechten Seite von Umgebungsluft zwecks Kühlung des Kühlers der Brennstoff-Zelle durchströmt wird und insbesondere in den Seitenwänden Lüftungsschlitze (18) vorhanden sind.

9. Vorfeld-Schlepper nach Ansprüchen 4 bis 8,
**dadurch gekennzeichnet, dass**
das Gehäuse (17) der Brennstoffzellen-Einheit (11) eine Größe besitzt, die in eine genormte Fachgröße, insbesondere eine DIN-Batterie-Box, passt.

10. Vorfeld-Schlepper nach Ansprüchen 4 bis 9,
**dadurch gekennzeichnet, dass**
der Wasserstoff-Tank (8) im Gehäuse (17) der Brennstoffzellen-Einheit (11) fest montiert ist und einen Tankanschluss (20) umfasst.

11. Vorfeld-Schlepper nach Ansprüchen 4 bis 9,
**dadurch gekennzeichnet, dass**
der Wasserstoff-Tank (8) zum Austausch gegen einen gefüllten Wasserstoff-Tank (8) leicht demontierbar ist und/oder die Brennstoff-Zelle (7) eine Spannung zwischen 63 und 101 Volt liefert bei einer Nominalspannung von 80 - 85 Volt.

12. Vorfeld-Schlepper nach Ansprüchen 4 bis 11,
**dadurch gekennzeichnet, dass**
der Wasserstoff-Tank (8) 1,5 bis 2 kg Wasserstoff aufnehmen kann und/oder der Speicherdruck im Wasserstoff-Tank (8) der Brennstoffzelleneinheit (11) zwischen 300 und 400 bar, insbesondere zwischen 340 und 360 bar, liegt.

## Claims

1. A kit for producing a ramp tractor (1) with difference energy sources, the kit comprising:
a) a tractor (1) with at least one electric motor (12) for driving drive wheels (4),
b) wherein the tractor (1) includes an energy compartment (2), and
c) a battery pack (5) sized according to the energy compartment (2), and
d) a fuel cell unit (11) with a fuel cell (7), a hydrogen tank (8), an intercooler (10) and air filter (9), an electronic control unit in a common housing (17) configured as a mountable and dismountable fuel cell unit (11) sized according to a size of the energy compartment (2), and
e) coupling locations (15, 16) in the energy compartment (2) for a vehicle heater and a display unit (14) for an energy supply in a driver cab (3),
**characterized in that**
f) the fuel cell unit (11) includes a buffer battery (6),
g) access openings for fueling the fuel cell (7) and access openings for recharging a battery pack (5) are provided in walls of the energy compartment (2),
h) the at least one electric motor (12) is configured to generate electrical energy during a generator operation when breaking the tractor (1) wherein the energy is stored in the buffer battery (6).

2. The kit according to claim 1,
**characterized in that**
the kit includes a hybrid unit (22) with a battery pack (5') and an internal combustion engine (23), in particular a diesel engine configured as a range extender which generates electrical energy through a generator (24) and delivers the electrical energy to the electric motor (12) and delivers a surplus of the electrical energy to the battery pack (5').

3. The kit according to one of the preceding claims,
**characterized in that**
the kit includes a gas drive configured as a piston engine or a gas turbine which generates electrical energy through a generator and which drives the electric motor (12) as a sole energy source or which is operated as a range extender in a hybrid unit (22) together with a battery pack (5').

4. A ramp tractor (1), comprising:
a) at least one driven axle which is driven by at least one electric motor (12),
b) wherein the ramp tractor (1) includes an energy compartment (2),
c) and a battery pack (5) sized according to the energy compartment (2),
d) wherein the energy compartment (2) includes a fuel cell unit (11) with a fuel cell (7), a hydrogen tank (8), an intercooler (10) an air filter (9), an electronic control unit in a common housing (17) configured as a mountable and dismountable fuel cell unit (11) sized according to a size of the energy compartment (2), which fuel cell unit is connected with the at least one electric motor, and
e) wherein the energy compartment (2) includes coupling locations (15, 16) for the vehicle heater and a display unit (14) for an energy supply in the driver cab (3),
**characterized in that**
f) the fuel cell unit (11) includes a buffer battery (6),
g) access openings for fueling the fuel cell (7) and access openings for recharging a battery pack (5) are provided in walls of the energy compartment (2),
h) the at least one electric motor (12) is configured to generate electrical energy during generator operation when breaking the tractor (1) wherein the energy is stored in the buffer battery (6).

5. The ramp tub according to claim 4,
**characterized in that**
the fuel cell (7), in particular its hydrogen injection nozzles are heated, in particular by electrically operated heat windings provided about the injection nozzles which are supplied with electricity in particular by the buffer battery (6).

6. The ramp tractor according to claim 4 or 5,
**characterized in that**
the fuel cell (7) is liquid cooled by a liquid cooling cycle and includes an intercooler (10) which is intercooled by ambient air.

7. The ramp tractor according to claim 6,
**characterized in that**
the liquid coolant cycle includes a controllable branch off to a heat exchanger (15) in the driver cab (3).

8. The ramp tractor according to claims 4 through 7,
**characterized in that**
the energy compartment (2) is flowed through by ambient air from a left side to a right side for cooling the intercooler of the fuel cell wherein ventilation slots (18) are provided in particular inside walls of the energy compartment (2).

9. The ramp tractor according to claims 4 through 8,
**characterized in that**
the housing (17) of the fuel cell (11) has a size that fits into a standard compartment, in particular into a DIN battery box.

10. The ramp tractor according to claims 4 through 9,
**characterized in that** the hydrogen tank (8) is fixated in the housing (17) of the fuel cell unit (11) and includes a tank connection (20).

11. The ramp tractor according to claims 4 through 9,
**characterized in that**
the hydrogen tank (8) is easily replaceable with a filled hydrogen tank (8) and/or the fuel cell (7) delivers a voltage between 63 and 101 V at a nominal voltage of 80 - 85 V.

12. The ramp tractor according to claims 4 through 11,
**characterized in that**
the hydrogen tank (8) is configured to receive 1.5 kg to 2 kg of hydrogen and/or a storage pressure in the hydrogen tank (8) of the fuel cell unit (11) is between 300 and 400 bar, in particular between 340 and 360 bar.

## Revendications

1. Kit de construction destiné à la construction d'un tracteur à bagages (1) avec différentes sources d'énergie, comprenant
a) un tracteur (1) avec au moins un moteur électrique (12) pour entraîner les roues motrices (4),
b) le tracteur (1) présentant un compartiment à énergie (2), et
c) un bloc d'alimentation (5) de la taille du compartiment à énergie (2) et
d) une unité de cellule à combustible (11) avec une cellule à combustible (7), un réservoir à hydrogène (8), un refroidisseur de retour (10), un filtre à air (9), une unité de contrôle électronique dans un boîtier commun (17) sous la forme d'une unité de cellule à combustible (11) montable et démontable de la taille du compartiment à énergie (2),
et
e) des points de couplage (15, 16) dans le compartiment à énergie (2) pour le chauffage du véhicule et l'unité d'affichage (14) de l'alimentation en énergie dans la cabine du conducteur (3)
**caractérisé en ce que**
f) l'unité de cellule à combustible (11) comprend une batterie tampon (6),
g) il y a des ouvertures d'accès pour le remplissage de la cellule à combustible (7) et des ouvertures d'accès pour le rechargement d'un bloc d'alimentation (5) dans les parois du compartiment à énergie (2),
h) l'au moins un moteur électrique (12) est approprié à produire de l'énergie électrique lors d'un freinage du tracteur (1) en mode générateur et que cette énergie électrique est stockée dans la batterie tampon (6).

2. Kit de construction suivant la revendication 1,
**caractérisé en ce que**
le kit de construction comprend une unité hybride (22) avec un bloc d'alimentation (5') et un moteur à combustion (23), en particulier un moteur diesel, sous la forme d'un prolongateur d'autonomie, qui produit de l'énergie électrique par l'intermédiaire d'un générateur (24), en approvisionne le moteur électrique (12) et fournit l'excès au pack d'alimentation (5').

3. Kit de construction suivant une des revendications précédentes,
**caractérisé en ce que**
le kit de construction comprend un fonctionnement au gaz sous la forme d'un moteur à piston ou d'une turbine à gaz qui produit de l'énergie électrique par l'intermédiaire d'un générateur et qui entraîne le moteur électrique (12), en tant qu'unique alimentation en énergie, ou qui est alimenté, en tant que prolongateur d'autonomie, dans une unité hybride (22), en association avec un bloc d'alimentation (5').

4. Tracteur à bagages (1) avec
a) au moins un axe entraîné, qui est entraîné par au moins un moteur électrique (12),
b) le tracteur à bagages (1) présentant un compartiment à énergie (2),
d) une unité de cellule à combustible (11) avec une cellule à combustible (7), un réservoir à hydrogène, un refroidisseur de retour (10), un filtre à air (9), une unité de contrôle électronique étant disposés dans le compartiment à énergie, dans un boîtier commun (17), sous la forme d'une unité de cellule à combustible (11) montable et démontable de la taille du compartiment à énergie (2), unité de cellule à combustible (11), qui est reliée électriquement à l'au moins un moteur électrique (12),
et
e) le compartiment à énergie (2) présentant des points de couplage (15, 16) pour le chauffage du véhicule et l'unité d'affichage (14) de l'alimentation en énergie dans la cabine du conducteur (3),
**caractérisé en ce que**
f) l'unité de cellule à combustible (11) comprend une batterie tampon (6),
g) il y a des ouvertures d'accès pour le remplissage de la cellule à combustible (7) et des ouvertures d'accès pour le rechargement du bloc d'alimentation (5) dans les parois du compartiment à énergie,
h) l'au moins un moteur électrique (12) est approprié à produire de l'énergie électrique lors d'un freinage du tracteur (1) en mode générateur et que cette énergie électrique est stockée dans la batterie de démarrage (6).

5. Tracteur à bagages suivant la revendication 4,
**caractérisé en ce que**
la cellule à combustible (7), en particulier les injecteurs d'hydrogène de celle-ci, sont chauffés, notamment au moyen d'enroulements chauffants électriques autour des injecteurs, enroulements qui sont alimentés en courant notamment par la batterie tampon (6).

6. Tracteur à bagages suivant la revendication 4 ou 5,
**caractérisé en ce que**
la cellule à combustible (7) est refroidie par liquide au moyen d'un circuit de refroidissement par liquide et comprend un refroidisseur de retour (10) qui est refroidi au moyen d'air ambiant.

7. Tracteur à bagages suivant la revendication 6,
**caractérisé en ce que**
le circuit de refroidissement par liquide comprend un branchement commandable vers un échangeur de chaleur (15) dans la cabine du conducteur (3).

8. Tracteur à bagages suivant les revendications 4 à 7,
**caractérisé en ce que**
le compartiment à énergie (2) est traversé d'air ambiant, du côté gauche vers le côté droit, pour refroidir le refroidisseur de la cellule à combustible et **en ce qu'**il y a des fentes d'aération (18), notamment dans les parois latérales.

9. Tracteur à bagages suivant les revendications 4 à 8,
**caractérisé en ce que**
le boîtier (17) de l'unité de cellule à combustible (11) présente une taille qui est adaptée à une taille de compartiment normalisée, en particulier un boîtier à batterie DIN.

10. Tracteur à bagages suivant les revendications 4 à 9,
**caractérisé en ce que**
le réservoir à hydrogène (8) est monté, de manière fixe, dans le boîtier (17) de l'unité de cellule à combustible (11) et comprend un raccord de réservoir (20).

11. Tracteur à bagages suivant les revendications 4 à 9,
**caractérisé en ce que**
le réservoir à hydrogène (8) est facilement démontable pour l'échanger contre un réservoir à hydrogène (8) rempli et/ou la cellule à combustible (7) délivre une tension entre 63 et 101 V à tension nominale de 80 à 85 V.

12. Tracteur à bagages suivant les revendications 4 à 11,
**caractérisé en ce que**
le réservoir à hydrogène (8) peut contenir 1,5 à 2 kg d'hydrogène et/ou la pression d'accumulation dans le réservoir à hydrogène (8) de l'unité de cellule à combustible (11) est comprise entre 300 et 400 bar, en particulier entre 340 et 360 bar.
